# EUROPEAN PATENT SPECIFICATION

(11) **EP 1 269 659 B1**
(45) Date of publication and mention of the grant of the patent: **02.11.2005**
(21) Application number: 01940289.0
(22) Date of filing: 30.03.2001
(51) Int. Cl.: H04B 7/26, H04L 12/56

(54) **TRAFFIC LOAD DISTRIBUTION BETWEEN BASE RADIO STATIONS**
VERKEHRSLASTVERTEILUNG ZWISCHEN RADIOSTATIONEN
REPARTITION DE LA CHARGE DE TRAFIC ENTRE STATIONS RADIO DE BASE

(30) Priority: 31.03.2000 SE 0001173
(43) Date of publication of application: 02.01.2003
(73) Proprietor: Mobitex Technology AB, 417 80 Göteborg (SE)
(72) Inventor: HENRIKSSON, Anders, S-413 23 Göteborg (SE)
(74) Representative: Andersson, Per Rune
(86) International application number: PCT/EP2001/003874
(87) International publication number: WO 2001/074094

(56) References cited:
- WO-A-95/35639
- WO-A-99/04511
- US-A- 4 792 984
- US-A- 5 633 915

## Description

### TECHNICAL FIELD

The invention refers to a cellular mobile data packet communication system comprising a first base radio station with a first maximum number of channels which each can communicate with a first maximum number of users. The first base radio station covers a cell in the system. The data communication system is arranged to be expanded by adding at least a second base radio station with a second maximum number of channels with a second maximum number of users to the first base radio station to form a base group (BG). The system additionally comprising means for deciding which base radio station has the least load. The invention also refers to a method for utilising the system.

### BACKGROUND ART

A system for cellular mobile data packet communication is used for transmitting wireless data information between users and a base radio station. The data information is collected by the user, and before transmitting the information to the base radio station, the user divides the data information into small packages of data information, i.e. data packets. The base radio station then transmits the information further in the system by wire or by a new wireless communication link.

The base radio station transmits information in the form of a flag to users in an area to declare whether it is ready for communication or not. Users that have clearance to communicate, they transmit bursts of data packets corresponding to the collected data information. In contrast to a mobile telephone system, information is not sent simultaneously between the user and the base station, and also before transmitting the users must have received a clearance signal, e.g. the mentioned clearance flag. The user may be a computer in a moving vehicle, or an automatic machine for soft drinks telling the manager that it is soon empty, or a burglar alarm, or a personal pager or other apparatus of a similar kind

The base radio station is connected to one or more antennas depending on the desired function. The area that the base radio station covers is called a cell, and the cell can be covered by using one antenna that covers the whole cell, or the cell can be divided into sectors that are covered by sector antennas. The base radio station can include one ore more channels that are used for communication between the base radio station and the users in the cell. Each channel can be used by a plurality of users, limited by the total load from the users.

When more than a maximum number of radio channels, N, are needed in a cell to maintain acceptable traffic capacity in a mobile data packet communications system, an existing base radio station with a maximum number of channels, N, may be replaced by a unit with a maximum number of channels greater than N , which has the capability of distributing the traffic on its radio channels in an optimal way to maximise traffic capacity. In some cases, however, it may be more flexible and/or less expensive to add one or more N-channel units to an existing one to form a group of base radio stations, base group, at the same site. When adding more base radio stations, sectored antennas are commonly used in which case each base radio station in the base group covers its own area.

When extending the number of individual N-channel base radio stations in a cell, using sectored antennas often leads to changed coverage area from the site where the antennas are located, compared to the coverage area which was obtained by using one antenna. This may lead to a need for new cell planning in the area, which is not desirable.

Another problem with sectored antennas occur if there is a specific, limited area where a lot of traffic needs to be handled. In this case, all traffic may at times be concentrated in one of the sectors, and the base radio station covering this sector may be overloaded, while the base radio stations covering the other sectors have a low load.

It may therefore be preferred if all N-channel units, the base group, could cover the same cell as the first unit, i.e. connected to the same antenna. But the traffic load may in this case be unevenly distributed among the-base radio stations depending on the roaming behaviour of the users. To get an optimal efficiency and to prevent a single base radio station in the base group to be overloaded, some method of distributing the traffic load evenly between the base radio stations must be introduced. WO-A-9904511 teaches such a method, where a mobile unit seeking contact to a base station tries to initiate a call via a BTS, BSC and MSC without prior knowledge whether the current traffic load permits this or not.

### DISCLOSURE OF THE INVENTION

The main object of the invention is thus to solve the problem of expanding a base radio station with N number of channels with existing means gaining optimal efficiency in a system for a cellular mobile data packet communication system comprising a first base radio station with a first maximum number of channels which each can communicate with a first maximum number of users, said first base radio station covering a cell, in which system the first base radio station indicates permission for users to communicate with it by transmitting a flag in the cell. A further object of the invention is to create an evenly distributed load in an expanded base group.

These problems are solved by the invention in that the system can be expanded by adding at least a second base radio station with a second maximum number of channels with a second maximum number of users to the first base radio station to form a base group, the system additionally comprising means for deciding which base radio station has the least load, with the base radio station with the least load transmitting its permission flag in the cell.

The base group uses the existing technical properties of the base radio stations adding only a new means for communication between the base radio stations. The communication establishes which base radio station in the group that has the least load, and directing that base radio station to transmit a flag in the cell. The flag gives the user permission to transmit to the base radio station. By using this inter-communication between the base radio stations, the load can be evenly distributed.

Some systems include users that are not designed for the process of always individually communicating with the base radio station before starting to communicate. In these cases the user receives a flag from the base radio station when entering the cell, telling the user to choose that base radio station, i.e. roam in on that base radio station. The user then keeps that information and communicates with that base radio station as long as the user does not change cell, or in some other way looses its contact with the base radio station, i.e. is no longer roamed in on the base radio station.

Since the expanded base group according to the invention decides which base radio station has the least load and shall transmit a flag in the cell, all users roaming in a base radio station in the base group will communicate with the base radio station with the least load, thus after a time there will be an even distribution of the traffic load over the base radio stations in the expanded base group.

The basic idea of the invention is to make it possible to use already existing base radio stations, and providing them with communication means that distribute the load, and thus providing a simple, cheap and more efficient possibility to expand an existing base radio station.

Preferred embodiments will become evident by the subsequent dependent claims.

### BRIEF DESCRIPTION OF DRAWINGS

The invention will in the following be described according to one embodiment of the invention together with the appended figure, where
Figure 1. Shows a schematic view of an expanded base group including two base radio stations in a base group.
Figure 2. Shows a schematic view of an expanded base group including three base radio stations in a base group.

### EMBODIMENTS

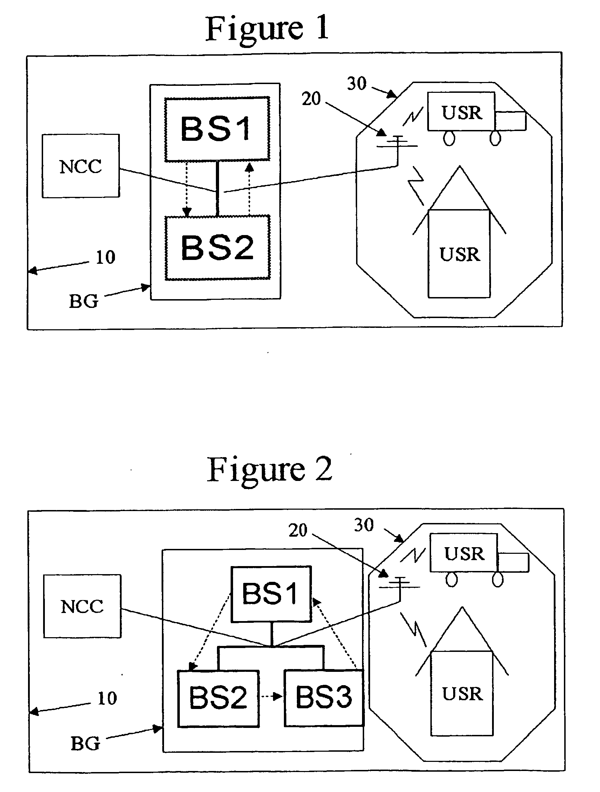

The invention comprises a cellular mobile data packet communication system (10) with a first base radio station (BS1) with a first maximal number of channels, connected to an antenna (20), which each channel can communicate with a number of users (USR) within a specific area. The antenna coverage area defines a cell (30) in the cellular system, in which cell (30) the first base radio station (BS1) handles the communication with the users (USR). The base radio station (BS1) comprises communication means that transmit a permission signal, a flag, in the cell (30), thus giving permission for the users (USR) in the cell (30) to communicate with that base radio station (BS1), whereby the users (USR) are free to roam in that base radio station (BS1). The communication means also has means for providing a manager in a network control centre (NCC) with traffic load information. If the traffic load is too high for the first base radio system (BS1), the system according to the invention allows the possibility of adding a second base radio station (BS2) as is shown in Figure 1.

Figure 1 shows diagrammatically the system according to the invention with a first base radio station (BS1) with a first maximal number of channels having a traffic overload and a second base radio station (BS2) with a second maximal number of channels, together forming a base group (BG). The forming of the base group (BG) makes it possible for the system (10) to deal with the greater traffic load. The base group (BG) is connected to the same antenna (20) as the first base radio station (BS1) covering the mentioned cell (30). The base radio stations (BS1, BS2) each use the same communication means as in the case with only one base radio station (BS1) in communicating with the users in the cell. The base radio stations (BS1, BS2) are connected to each other making it possible to inter-communicate with each other. To enable the inter-communication and to tell the base radio station that it belongs to a base group (BG) a new inter-communication means is installed from the network control centre (NCC) by using the already existing network.

To obtain maximal efficiency within the base group (BG), the base radio stations (BS1, BS2) uses the new inter-communication means according to the invention to investigate which one of them has the least load. When the investigation is finished, the busiest base radio station (BS1, BS2) removes its flag, thereby prohibiting users in the cell to roam in. The base radio station (BS1, BS2) with the least load is then the only one still transmitting a flag in the cell indicating permission to communicate with it. As a result of the inter-communication the base group (BG) obtains an even distribution over its base group members, i.e. base radio stations (BS1, BS2).

Figure 2 shows diagrammatically a system further expanded with a third base radio station (BS3) to meet even further traffic load demands. The base group (BG) now consists of three base radio stations (BS1, BS2, BS3), still connected to the antenna (20) covering the cell (30). Depending on the roaming behaviour of the users, there may be an uneven distribution between the base radio stations (BS1, BS2, BS3). The base radio stations (BS1, BS2, BS3) are connected to each other, marked with a continuous line. The base radio stations (BS1, BS2, BS3) respectively include means for inter-communication within the base group (BG), the communication directions being shown with broken line arrows in fig. 2. The same technique for inter-communication and downloading new communication means is used as for the base group consisting of two base radio stations (BS1, BS2) described above. The new base radio station (BS3) also is told that it belongs to a group and to set or remove its flag depending on certain events.

To establish an optimal efficiency in the system, the formed base group (BG) must have a well-functioning inter-communication means to obtain an even traffic load distribution. Such communication means are described in the following text.

In a first embodiment of the communication means, the base radio stations (BS1, BS2, BS3) are connected in a circular manner, and a signal is propagated in a circular way between the base radio stations (BS1, BS2, BS3) checking the traffic load on a base radio station. To simplify the explanation of the inter-communication and the measures taken at each base radio station (BS1, BS2, BS3) an example is made that starts with the first base radio station which has just received a signal from the third base radio station (BS3). The first base radio station (BS1) compares its traffic load with the traffic load on the third base radio station (BS3), and if the first base radio station (BS1) has the highest load it, removes its flag. The signal including traffic load information from the first base radio station (BS1) is then sent from the first base radio station (BS1) to the second base radio station (BS2). The second base radio station makes a comparison and decides whether to remove its flag or not, after which it transmits traffic load information to the the third base radio station (BS3) that makes a traffic load comparison and decides if it is going to remove its flag or not. When the third base radio station (BS3) transmits its traffic load information further on to the first base radio station (BS1) the circle is complete, and there is only one of the base radio stations (BS1, BS2, BS3) that still has set its flag. The base radio station that still has set its flag has the least load and transmits the flag in the cell enabling the users to roam in the base radio station with the least load, resulting in an even distribution of the traffic load on the base radio stations (BS1, BS2, BS3), thus a better efficiency. It has to be pointed out that it does not matter which base radio station that transmit the inter-communication signal first since the signal is sent in a circular way with a specific interval.

In a second embodiment of the communication means, the inter-communication signal stores information in the form of a list including traffic load information from all the base radio stations together with the base radio station identity number. When the circle is complete, the list is checked by one predestined base radio station in the base group and the base radio station with the least load is pointed out and allowed to keep its flag set. When using this method, it is possible to control the system better than with the method in the first embodiment, e.g. it is possible to allow more than one base radio station (BS1, BS2, BS3) to keep its flag set, enabling users in the cell to roam in more than one base radio station in the base group. But, if there are a lot of base radio stations in the base group, the inter-communication traffic may be high which may slow down the distribution mechanism, thus slowing down the system.

If the inter-communication signal does not propagate correctly, it is of the utmost importance that there exists a fault handling process in the system. In the system in the present invention there are numerous of ways to deal with the problem, e.g. if one of the base radio stations does not receive a signal within a time out period it sets it flag. This may lead to all of the base radio stations allowing the users in the cell to roam in, which may lead to a worse traffic load distribution, but at least, it enables the users to communicate.

The way the base radio stations (BS1, BS2, BS3) in the base group (BG) inter-communicates and how the traffic load is determined will vary from system to system as well as the criteria for allowing users to roam into a base radio station or not.

The invention is not limited to what is described above, but different embodiments of the invention may be possible within the scope of the subsequent claims. For example, in the first embodiment of the communication means there can be set a plurality of flags, allowing more than one base radio station to communicate.

At present, the invention is intended for use with one-channel base radio stations, but a combination of any base radio stations can be made, regardless of their number of channels.

If the system includes users that are not designed for the process of always communicating with the base radio station before it transmits, the process of evening out the traffic load may be enhanced by turning off all the base stations during a short while, for example in connection with the installation of additional base radio stations to the base group, forcing the users to try to roam in some other base radio station. When the base radio stations then are turned on again all the users try to roam in on the base group, in which the system according to the invention directs a new user, in this case all the users in the cell covered by the base group, to the base radio station that has the least load, and thus distributing the users over the base radio stations included in the group.

## Claims

1. A cellular mobile data packet communication system (10) comprising a first base radio station (BS1) with a first maximum number of channels which each can communicate with a first maximum number of users (USR), said first base radio station (BS1) covering a cell (30) in the system, said data communication system (10) is arranged to be expanded by adding at least a second base radio station (BS2) with a second maximum number of channels with a second maximum number of users (USR) to the first base radio station to form a base group (BG), the system (10) additionally comprising means for deciding which base radio station (BS1, Bs2) has the least load, **characterized in that** the base radio station (BS1, BS2) with the least load is arranged to transmit a permission flag in the cell (30), thereby indicating permission for the users (USR) to communicate with it.

2. A system according to claim 1 **characterized in, that** there is means for inter-communication between the first and second base radio stations (BS1, BS2) for determining the load on the respective base radio stations.

3. A system according to any of the preceding claims
**characterized in, that** the opening of the second base radio station (BS2) can be done via an external data communication link.

4. A system according to any of the preceding claims
**characterized in, that** it further comprises a third base radio station (BS3) that communicates with each of the other base radio stations (BS1, BS2) in order to even out the traffic load over the base radio stations (BS1, BS2, BS3).

5. A system according to any of the preceding claims
**characterized in, that** the inter-communication system has means for deciding which base radio station (BS1, BS2, BS3) that shall set its flag.

6. A system according to any of the preceding claims
**characterized in, that** the maximum number of channels in the first base radio station (BS1) is equal to one.

7. A system according to any of the preceding claims
**characterized in, that** the maximum number of channels in the second base radio station (BS2) is equal to one.

8. A system according to any of the preceding claims
**characterized in, that** the maximum number of channels in the third base radio station (BS3) is equal to one.

9. A system according to any of the preceding
claims **characterized in, that** the base radio stations (BS1, BS2, BS3) uses the same antenna (20).

10. A method for use in a cellular mobile data packet communication system (10) comprising a first base radio station (BS1) with a first maximum number of channels which each can communicate with a first maximum number of users (USR), said first base radio station (BS1) covering a cell (30), which method comprises the following steps:
- adding at least a second base radio station (BS2) with a second maximum number of channels and a second number of users to the data communication system (10) to form a base group (BG),
- taking a decision of which base radio station (BS1, BS2, BS3) has the least load,
- transmission of a permission flag in the cell (30) from the base radio station with the least load, thereby indicating permission for the users (USR) to communicate with it.

11. A method according to claim 10, further comprising inter-communication between the first and second base radio stations (BS1, BS2) for determining the load on the base radio stations respectively.

12. A method according to any of claims 10 or 11 further comprising that the opening of the second base radio station (BS2) can be done via an external data communication link.

13. A method according to any of claims 10 - 12 further comprising adding a third base radio station (BS3) that communicates with each of the other base radio stations (BS1, BS2) in order to even out the traffic load over the base radio stations (BS1, BS2, BS3).

14. A method according to any of claims 10-13 further comprising inter-communication between the base radio stations (BS1, BS2, BS3) for deciding which base radio station that shall transmit a flag.

15. A method according to any of claims 10-14 further comprising a connection between all the base radio stations (BS1, BS2, BS3) to the same antenna (20).

## Patentansprüche

1. Ein zellulares mobiles Datenpaket-Kommunikationssystem (10), das eine erste Basis-Radiostation (BS 1) mit einer ersten Maximalanzahl von Kanälen umfasst, welcher jeder mit einer ersten Maximumanzahl von Nutzern (USR) kommunizieren kann, wobei die erste Basis-Radiostation (BS1) eine Zelle (30) in dem System abdeckt,
wobei das Datenkommunikationssystem (10) derart eingerichtet ist,dass es durch Hinzufügen wenigstens einer zweiten Basis-Radiostation mit einer zweiten Maximalanzahl von Kanälen mit einer zweiten Maximumanzahl von Nutzern (USR) zur ersten Basisstation ausgedehnt wird um eine Basisgruppe (BG) zu bilden,
und wobei das System (10) außerdem eine Einrichtung für die Entscheidung umfasst, welche Basis-Radiostation (BS1, BS2) die geringste Auslastung hat,
**dadurch gekennzeichnet,**
**dass** die Basis-Radiostation (BS1, BS2) mit der geringsten Auslastung dafür eingerichtet ist, ein Erlaubniskennzeichen in die Zelle (30) zu übertragen und dabei die Genehmigung für die Benutzer (USR) anzeigt, mit ihr zu kommunizieren.

2. Ein System nach Anspruch 1,
**dadurch gekennzeichnet,**
**dass** dort eine Einrichtung zur gegenseitigen Kommunikation zwischen den ersten und zweiten Basis-Radiostationen (BS1, BS2) ist zur Bestimmung der Auslastung der jeweiligen Basis-Radiostationen.

3. Ein System nach einem der vorhergehenden Ansprüche,
**dadurch gekennzeichnet, dass** die Freigabe der zweiten Basis-Radiastation (BS2) Ober eine externe Datenkommunikationsverbindung erfolgen kann.

4. Ein System nach einem der vorhergehenden Ansprüche, **dadurch gekennzeichnet, dass** es weiterhin eine dritte Basis-Radiostation (BS3) umfasst, die mit jeder der anderen Basis-Radiostationen (BS1, BS2) kommuniziert, um die Verkehrsbelastung über den Basis-Radiostationen (BS1, BS2, BS3) auszugleichen.

5. Ein System nach einem der vorhergehenden Ansprüche, **dadurch gekennzeichnet, dass** das System für die gegenseitige Kommunikation eine Einrichtung zur Entscheidung aufweist, welche Basis-Radiostation (BS1, BS2, BS3) diejenige ist, die ihr Erlaubniskennzeichen setzen soll.

6. Ein System nach einem der vorhergehenden Ansprüche, **dadurch gekennzeichnet, dass** die Maximalanzahl von Kanälen in der ersten Basis-Radiostation (BS1) gleich eins ist.

7. Ein System nach einem der vorhergehenden Ansprüche, **dadurch gekennzeichnet, dass** die Maximalanzahl von Kanälen in der zweiten Basis-Radiostation (BS2) gleich eins ist.

8. Ein System nach einem der vorhergehenden Ansprüche, **dadurch gekennzeichnet, dass** die Maximalanzahl von Kanälen in der dritten Basis-Radiostation (BS3) gleich eins ist.

9. Ein System nach einem der vorhergehenden Ansprüche, **dadurch gekennzeichnet, dass** die Basis-Radiostationen (BS1, BS2, BS3) dieselbe Antenne (20) benutzen.

10. Ein Verfahren für den Gebrauch in einem zellularen mobilen Datenpaket-Kommunikationssystem (10), das eine erste Basis-Radiostation (BS1) mit einer ersten Maximalanzahl von Kanälen umfasst, welcher jeder mit einer ersten Maximalanzahl von Nutzern (USR) kommunizieren kann, wobei die sogenannte erste Basis-Radiostation (BS1) eine Zelle (30) abdeckt und das Verfahren die folgenden Schritte umfasst
- Hinzufügen wenigstens einer zweiten Basis-Radiostation (BS2) mit einer zweiten Maximalanzahl von Kanälen und einer zweiten Anzahl von Nutzern zum DatenKommunikationssystem (10) zur Bildung einer Basisgruppe (BG),
- eine Entscheidung treffen, welche Basis-Radiostation (BS1, BS2, BS3) die geringste Auslastung hat,
- Übertragung eines Erlaubniskennzeichens in die Zelle (30) von der Basis-Radiostation mit der geringsten Auslastung, dabei Anzeigen der Erlaubnis für die Nutzer (USR), mit ihr zu kommunizieren.

11. Ein Verfahren nach Anspruch 10, die weiterhin eine gegenseitige Kommunikation zwischen den ersten und zweiten Basis-Radiostationen (BS1, BS2) zur Bestimmung der Auslastung der jeweiligen Basis-Radiostationen umfasst.

12. Ein Verfahren nach einem der Ansprüche 10 oder 11, das weiterhin umfasst, dass die Freigabe der zweiten Basis-Radiostation (BS2) mittels eines externen Datenkommunikationslinks vorgenommen werden kann.

13. Ein Verfahren nach einem der Ansprüche 10 bis 12, das weiterhin umfasst, dass eine dritte Basis-Radiostation (BS3) hinzugefügt wird, die mit jeder der anderen Basis-Radiostationen (BS1, BS2) kommuniziert, um die Verkehrsbelastung über den Basis-Radiostationen (BS1, BS2, BS3) auszugleichen.

14. Ein Verfahren nach einem der Ansprüche 10 bis 13, das weiterhin eine gegenseitige Kommunikation zwischen den Basis-Radiosiabonen (BS1, BS2, BS3) umfasst, zur Entscheidung, welche Basis-Radiostation diejenige ist, die ein Kennzeichen übermitteln soll.

15. Ein Verfahren nach einem der Ansprüche 10 bis 14, das weiterhin eine Verbindung zwischen allen Basis-Radiostationen (BS1, BS2, BS3) zur selben Antenne (20) umfasst.

## Revendications

1. Système de communication mobile cellulaire par paquets de données (10) comprenant une première station radio de base (BS1) ayant un premier nombre maximum de canaux qui peuvent chacun communiquer avec un premier nombre maximum d'utilisateurs (USR), ladite première station radio de base (BS1) couvrant une cellule (30) du système, ledit système de communication de données (10) étant agencé pour être agrandi en ajoutant au moins une seconde station radio de base (BS2) avec un second nombre maximum de canaux et un second nombre maximum d'utilisateurs (USR) à la première station radio de base afin de former un groupe de base (BG), le système (10) comprenant en outre un moyen destiné à décider quelle station radio de base (BS 1, BS2) présente la charge la plus faible, **caractérisé en ce que** la station radio de base (BS1, BS2) ayant la charge la plus faible est agencée pour transmettre un indicateur d'autorisation dans la cellule (30), en indiquant ainsi une autorisation pour que les utilisateurs (USR) communiquent avec elle.

2. Système selon la revendication 1, **caractérisé en ce qu'**il existe un moyen destiné à une intercommunication entre les première et seconde stations radio de base (BS1, BS2) afin de déterminer la charge sur les stations radio de base respectives.

3. Système selon l'une quelconque des revendications précédentes,
**caractérisé en ce que**, l'ouverture de la seconde station radio de base (BS2) peut être effectuée par l'intermédiaire d'une liaison de communication de données externe.

4. Système selon l'une quelconque des revendications précédentes,
**caractérisé en ce que**, il comprend en outre une troisième station radio de base (BS3) qui communique avec chacune des autres stations radio de base (BS1, BS2) de manière à répartir la charge de trafic sur les stations radio de base (BS1, BS2, BS3).

5. Système selon l'une quelconque des revendications précédentes,
**caractérisé en ce que**, le système d'intercommunication comporte un moyen destiné à décider quelle station radio de base (BS1, BS2, BS3) armera son indicateur.

6. Système selon l'une quelconque des revendications précédentes,.
**caractérisé en ce que** le nombre maximum des canaux dans la première station radio de base (BS1) est égal à un.

7. Système selon l'une quelconque des revendications précédentes,
**caractérisé en ce que**, le nombre maximum des canaux dans la seconde station radio de base (BS2) est égal à un.

8. Système selon l'une quelconque des revendications précédentes,
**caractérisé en ce que**, le nombre maximum des canaux dans la troisième station radio de base (BS3) est égal à un.

9. Système selon l'une quelconque des revendications précédentes, **caractérisé en ce que** les stations radio de base (BS1, BS2, BS3) utilisent la même antenne (20).

10. Procédé à utiliser dans un système de communication mobile cellulaire par paquets de données (10) comprenant une première station radio de base (BS1) avec un premier nombre maximum de canaux qui peuvent chacun communiquer avec un premier nombre maximum d'utilisateurs (USR), ladite première station radio de base (BS1) couvrant une cellule (30), lequel procédé comprend les étapes suivantes :
- ajouter au moins une seconde station radio de base (BS2) avec un second nombre maximum de canaux et un second nombre d'utilisateurs au système de communication de données (10) afin de former un groupe de base (BG),
- de prendre une décision consistant à évaluer quelle station radio de base (BS1, BS2, BS3) présente la charge la plus faible,
- transmettre un indicateur d'autorisation de la cellule (30) depuis la station radio de base avec la charge la plus faible, en indiquant ainsi une autorisation pour que les utilisateurs (USR) communiquent avec celle-ci.

11. Procédé selon la revendication 10, comprenant en outre une intercommunication entre la première et la seconde station radio de base (BS1, BS2) afin de déterminer la charge sur les stations radio de base, respectivement.

12. Procédé selon l'une quelconque des revendications 10 ou 11, comprenant en outre le fait que l'ouverture de la seconde station radio de base (BS2) peut être faite par l'intermédiaire d'une liaison de communication de données externe.

13. Procédé selon l'une quelconque des revendications 10 à 12, comprenant en outre l'addition d'une troisième station radio de base (BS3) qui communique avec chacune des autres stations radio de base (BS1, BS2) de manière à répartir la charge de trafic sur les stations radio de base (BS1, BS2, BS3).

14. Procédé selon l'une quelconque des revendications 10 à 13, comprenant en outre une intercommunication entre les stations radio de base (BS1, BS2, BS3) afin de décider quelle station radio de base transmettra un indicateur.

15. Procédé selon l'une quelconque des revendications 10 à 14, comprenant en outre une connexion entre toutes les stations radio de base (BS1, BS2, BS3) sur la même antenne (20).
